# EUROPEAN PATENT SPECIFICATION

(11) **EP 4 364 877 B1**
(45) Date of publication and mention of the grant of the patent: **18.11.2026**
(21) Application number: 23165963.2
(22) Date of filing: 31.03.2023
(51) Int. Cl.: B23D 19/00, B26D 1/22, B23D 35/00, B26D 1/15, B26D 7/18, B26D 7/20

(54) **ELECTRODE PLATE SLITTING CUTTER HOLDER AND ELECTRODE PLATE SLITTING MACHINE**
ELEKTRODENPLATTENSCHLITZSCHNEIDERHALTER UND ELEKTRODENPLATTENSCHLITZMASCHINE
SUPPORT DE COUPE À REFENDRE DE PLAQUE D'ÉLECTRODE ET MACHINE À REFENDRE DE PLAQUE D'ÉLECTRODE

(30) Priority: 07.11.2022 CN 202222944128 U
(43) Date of publication of application: 08.05.2024
(73) Proprietor: Contemporary Amperex Technology (Hong Kong) Limited, Central, Central And Western District (HK)
(72) Inventor: WU, Hailian, Ningde, 352100 (CN); ZHANG, Qi, Ningde, 352100 (CN); GAO, Xijie, Ningde, 352100 (CN); FAN, Yanhuang, Ningde, 352100 (CN); HUANG, Caixia, Ningde, 352100 (CN)
(74) Representative: Gong, Jinping

(56) References cited:
- EP-B1- 0 671 247
- CN-A- 108 405 962
- CN-A- 114 713 905
- JP-A- S6 119 595
- US-A- 3 628 409
- US-A- 4 878 521
- US-A- 4 922 779
- US-A- 5 197 366
- US-A- 5 435 217
- US-A1- 2022 140 304

## Description

### Technical Field

The present application relates to the technical field of battery manufacturing, and in particular, to an electrode plate slitting cutter holder according to any of claims 1 to 7 and an electrode plate slitting machine as specified in claim 8.

### Background Art

This part only provides only background information related to the present disclosure, which is not necessarily the prior art.

Currently, during manufacturing of positive and negative electrode plates of a traction battery, it is necessary to use an electrode plate slitting machine, which comprises an electrode plate slitting cutter holder, and a cutter on the electrode plate slitting cutter holder is used to slit the positive and negative electrode plates of the traction battery.

In related technologies, electrode plate slitting cutter holders all slit positive and negative electrode plates of a traction battery by an upper cutter and a lower cutter cooperating with each other. During slitting, the upper cutter and the lower cutter may come into contact with each other, which will inevitably lead to the wear of the cutters, thereby affecting the service life of the cutters and further seriously affecting the slitting quality of the positive and negative electrode plates.

### Summary

An objective of the present application is to provide an electrode plate slitting cutter holder and an electrode plate slitting machine, to improve the slitting quality of positive and negative electrode plates of a battery and prolonging the service life of a cutter.

This objective is achieved by an electrode plate slitting holder as defined in claim 1.

In the electrode plate slitting cutter holder provided according to the present application, the double-bevel cutter is used to slit electrode plates instead of a slitting manner in which an upper cutter and a lower cutter cooperate with each other in a conventional electrode plate slitting frame, that is, only the lower cutter holder is provided with the double-bevel cutter, and the other is provided with the cutter groove cooperating with the double-bevel cutter and is configured to wind positive and negative electrode plates of a battery. By adjusting a distance between the upper cutter holder and the lower cutter holder, the upper cutter holder and the lower cutter holder are driven to rotate, so that the positive and negative electrode plates of the battery can be slit by the double-bevel cutter, and the double-bevel cutter will not wear when slitting the electrode plates. This helps to prolong the service life of the double-bevel cutter, and avoids frequent replacement of the cutter, thereby helping to improve slitting quality of the positive and negative electrode plates of the battery.

The upper cutter holder comprises an upper cutter shaft and an upper shaft sleeve arranged on a peripheral side of the upper cutter shaft, and the lower cutter holder comprises a lower cutter shaft and a lower shaft sleeve arranged on a peripheral side of the lower cutter shaft, wherein the upper cutter shaft and the lower cutter shaft are separately connected to the frame in a rotatable manner, one of the upper shaft sleeve and the lower shaft sleeve is fixedly connected to the double-bevel cutter, and a peripheral side of the other is provided with the cutter groove.

The upper shaft sleeve is arranged on the peripheral side of the upper cutter shaft in a sleeved manner, and no relative movement occurs between the upper shaft sleeve and the upper cutter shaft. Similarly, the lower shaft sleeve is arranged on the peripheral side of the lower cutter shaft in a sleeved manner, and no relative movement occurs between the lower shaft sleeve and the lower cutter shaft. When rotating, the upper cutter shaft can drive the upper shaft sleeve to rotate; and when rotating, the lower cutter shaft can drive the lower shaft sleeve to rotate. The double-bevel cutter is fixedly connected to the lower shaft sleeve, which can achieve the objective of the present application.

A peripheral side of the upper shaft sleeve is provided with the cutter groove, the lower shaft sleeve is fixedly connected to the double-bevel cutter, the lower shaft sleeve comprises a first shaft sleeve and a second shaft sleeve respectively arranged on two sides of the double-bevel cutter, a quick release mechanism is arranged between the first shaft sleeve and the second shaft sleeve, and the quick release mechanism is configured to lock the double-bevel cutter between the first shaft sleeve and the second shaft sleeve.

Through the arrangement of the quick release mechanism between the first shaft sleeve and the second shaft sleeve, the quick release mechanism has functions of quick installation and quick disassembly, which can not only quickly lock the double-bevel cutter between the first shaft sleeve and the second shaft sleeve, but also quickly separate the double-bevel cutter from the first shaft sleeve and the second shaft sleeve, thereby facilitating the replacement or maintenance of the double-bevel cutter.

The quick release mechanism comprises a first thread sleeve and a second thread sleeve which is in threaded fit with the first thread sleeve, wherein the first thread sleeve and the second thread sleeve are provided over the lower cutter shaft in a sleeved manner, and are fixedly connected to the first shaft sleeve and the second shaft sleeve, respectively, for locking the double-bevel cutter in a threaded connection.

A side of the first shaft sleeve that faces the second shaft sleeve is provided with the first thread sleeve, a side of the second shaft sleeve that faces the first shaft sleeve is provided with the second thread sleeve, the first thread sleeve and the second thread sleeve are arranged on the lower cutter shaft in a sleeved manner, where the double-bevel cutter is provided with a communication hole, and the double-bevel cutter is arranged on the first thread sleeve or the second thread sleeve through the communication hole, so that the double-bevel cutter can be locked between the first shaft sleeve and the second shaft sleeve after the first thread sleeve is in threaded connection with the second thread sleeve, and the structure and principle are relatively simple and easy to implement.

In some embodiments of the present application, a side of the first shaft sleeve that faces the double-bevel cutter is provided with a first dust removal port, and the first dust removal port is configured to adsorb powder falling off during electrode plate slitting; and/or a side of the second shaft sleeve that faces the double-bevel cutter is provided with a second dust removal port, and the second dust removal port is configured to adsorb powder falling off during electrode plate slitting.

The first dust removal port extends in an axial direction of the first shaft sleeve and runs through the first shaft sleeve. A first dust collector may be arranged on a side of the first dust removal port away from the double-bevel cutter, and the powder falling off during electrode plate slitting can be removed through the first dust removal port when the first dust collector operates.

Similarly, the second dust removal port extends in an axial direction of the second shaft sleeve and runs through the second shaft sleeve. A second dust collector may be arranged on a side of the second dust removal port away from the double-bevel cutter, and the powder falling off during electrode plate slitting can be removed through the second dust removal port when the second dust collector operates.

In some embodiments of the present application, the frame comprises: a bottom plate extending in a lengthwise direction of the upper cutter shaft; a lower cutter mount comprising a first cutter mount and a second cutter mount that are arranged at two ends of the bottom plate in a lengthwise direction; and an upper cutter mount comprising a third cutter mount arranged above the first cutter mount and a fourth cutter mount arranged above the second cutter mount, wherein two ends of the upper cutter shaft are rotatably connected to the third cutter mount and the fourth cutter mount, respectively, and two ends of the lower cutter shaft are rotatably connected to the first cutter mount and the second cutter mount, respectively.

Specifically, the first cutter mount, the second cutter mount, the third cutter mount and the fourth cutter mount are all provided with bearings, the two ends of the upper cutter shaft are respectively in close fit and connection with the bearings on the first cutter mount and the third cutter mount, the two ends of the lower cutter shaft are respectively in close fit and connection with the bearings on the second cutter mount and the fourth cutter mount, and a driving mechanism is arranged on a side of the frame; and the driving mechanism is connected to the upper cutter shaft and the lower cutter shaft and is configured to drive the upper cutter shaft to rotate relative to the upper cutter mount and drive the lower cutter shaft to rotate relative to the lower cutter mount.

In some embodiments of the present application, a first lifting adjustment assembly is arranged between the first cutter mount and the third cutter mount, a second lifting adjustment assembly is arranged between the second cutter mount and the fourth cutter mount, and the first lifting adjustment assembly and the second lifting adjustment assembly are configured to adjust a distance between the upper cutter shaft and the lower cutter shaft.

The first lifting adjustment assembly is used to adjust a distance between the first cutter mount and the third cutter mount, and the second lifting adjustment assembly is used to adjust a distance between the second cutter mount and the fourth cutter mount, so as to adjust the distance between the upper cutter holder and the lower cutter holder, and then adjust the distance between the double-bevel cutter and the cutter groove. Therefore, on the one hand, the distance between the upper cutter holder and the lower cutter holder fits with a thickness of each of the positive and negative electrode plates of the battery, and on the other hand, the damage caused by the contact between the double-bevel cutter and the cutter groove during electrode plate slitting is prevented.

In some embodiments of the present application, the first lifting adjustment assembly comprises a first screw and a first elastic member, the first elastic member is arranged between the first cutter mount and the third cutter mount, the first cutter mount is provided with a first threaded hole, the third cutter mount is provided with a second threaded hole in communication with the first threaded hole, and the first screw is in threaded connection with the first cutter mount and is in threaded connection with the third cutter mount through the second threaded hole; and/or the second lifting adjustment assembly comprises a second screw and a second elastic member, the second elastic member is arranged between the second cutter mount and the fourth cutter mount, the second cutter mount is provided with a third threaded hole, the fourth cutter mount is provided with a fourth threaded hole in communication with the third threaded hole, and the second screw is in threaded connection with the fourth cutter mount and is in threaded connection with the second cutter mount through the third threaded hole.

The first elastic member is arranged between the first cutter mount and the third cutter mount, and the first screw is in threaded connection with the third cutter mount and the first cutter mount, so that the distance between the first cutter mount and the third cutter mount can be adjusted by adjusting a length of threaded connection between the first screw and the second threaded hole. Similarly, the second elastic member is arranged between the second cutter mount and the fourth cutter mount, and the second screw is in threaded connection with the fourth cutter mount and the second cutter mount, so that after the second screw is in threaded connection with the fourth cutter mount, the distance between the fourth cutter mount and the second cutter mount can be adjusted by adjusting a length of threaded connection between the second screw and the fourth threaded hole in the second cutter mount.

In addition, after the distance between the upper cutter mount and the lower cutter mount is adjusted, when the positive and negative electrode plates of the battery between the upper cutter holder and the lower cutter holder are uneven in thickness, the first elastic member and the second elastic member serves an elastic buffering function, which can ensure the stable conveying of the electrode plates between the upper cutter holder and the lower cutter holder, thereby ensuring the normal slitting of the electrode plates by the double-bevel cutter.

In some embodiments of the present application, one of the first cutter mount and the third cutter mount is provided with a first guide connecting member, the other is provided with a first connecting column, the first guide connecting member is provided with a first guide groove extending in a vertical direction, and the first connecting column is inserted in the first guide groove; and/or one of the second cutter mount and the fourth cutter mount is provided with a second guide connecting member, the other is provided with a second connecting column, the second guide connecting member is provided with a second guide groove extending in a vertical direction, and the second connecting column is inserted in the guide groove.

By inserting a first guide post into the first guide groove, the first guide groove serves a guiding and limiting function, so that the third cutter mount can only move relative to the first cutter mount in the vertical direction, thereby preventing deviation during adjustment of a height distance between the third cutter mount and the first cutter mount.

Similarly, by inserting a second guide post into the second guide groove, the second guide groove also serves a guiding and limiting function, so that the fourth cutter mount can only move relative to the second cutter mount in the vertical direction, thereby preventing deviation during adjustment of a height distance between the fourth cutter mount and the second cutter mount.

In some embodiments of the present application, the double-bevel cutter is circular, the double-bevel cutter is coaxially arranged with the lower shaft sleeve, and a diameter of the double-bevel cutter is greater than that of the lower shaft sleeve.

When the double-bevel cutter is arranged in the above manner, after a biting amount of the double-bevel cutter is set, the stability of the double-bevel cutter in slitting the positive and negative electrode plates of the battery can be ensured, which helps to improve the slitting quality of the electrode plates.

In some embodiments of the present application, projections of axes of the upper cutter holder and the lower cutter holder in the vertical direction coincide.

The upper cutter holder and the lower cutter holder are arranged in the above manner, which reduces a space occupied by the electrode plate slitting cutter holder in a horizontal direction, and helps to reduce the volume of the product, thereby facilitating the installation and arrangement of the product.

According to a second aspect, the present application provides an electrode plate slitting machine, comprising an electrode plate slitting cutter holder according to any one of the implementations of the first aspect.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
FIG. 1 is a schematic diagram of an electrode plate slitting cutter holder provided in some embodiments of the present application in a perspective;
FIG. 2 is a schematic diagram of an electrode plate slitting cutter holder provided in some embodiments of the present application in another perspective; and
FIG. 3 is an enlarged schematic diagram of a portion A in FIG. 2.

Reference numerals are as follows:
Electrode plate slitting cutter holder 100;
upper cutter holder 20; lower cutter holder 30; double-bevel cutter 40;
bottom plate 11, first cutter mount 12, second cutter mount 13, third cutter mount 14, fourth cutter mount 15, first guide connecting member 16, second guide connecting member 17, upper cutter shaft 21, upper shaft sleeve 22, lower cutter shaft 31, lower shaft sleeve 32;
first screw 141, first connecting column 142, second screw 151, second connecting column 152, first guide groove 161, second guide groove 171, cutter groove 221, first shaft sleeve 321, second shaft sleeve 322, quick release mechanism 323;
first dust removal port 3211, second dust removal port 3221, first thread sleeve 3231, second thread sleeve 3232.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprise" and "have" and any variations thereof in the description and the claims of the present application as well as the brief description of the drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: the three instances of A alone, A and B simultaneously, and B alone. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "install", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of traction batteries, the market demand for the traction batteries is also expanding.

During manufacturing of a traction battery, it is necessary to use an electrode plate slitting machine to slit positive and negative electrode plates, the electrode plate slitting machine comprises an electrode plate slitting cutter holder, and a cutter on the electrode plate slitting cutter holder is used to slit the positive and negative electrode plates of the battery.

The inventors of the present application have noticed that electrode plate slitting cutter holders in related technologies usually slit positive and negative electrode plates of a traction battery by an upper cutter and a lower cutter cooperating with each other. During slitting, the upper cutter and the lower cutter may come into contact with each other, which will inevitably lead to the wear of the cutters, thereby affecting the service life of the cutters and further seriously affecting the slitting quality of the battery electrode plates.

In order to solve the problem that the upper cutter and the lower cutter may have contact wear during slitting, which affects the service life of the cutters and the slitting quality of the positive and negative electrode plates, the present application designs an electrode plate slitting cutter holder, which uses a single double-bevel cutter to cut the positive and negative electrode plates of the traction battery instead of a manner in which the upper cutter and the lower cutter cooperate with each other. This can not only prevent the contact wear when the upper cutter and the lower cutter are used, to prolong the service life of the cutter, but also improve the slitting quality of the positive and negative electrode plates of the traction battery.

An electrode plate slitting cutter holder 100 disclosed according to an embodiment of the present application is used for, including but not limited to, slitting positive and negative electrode plates of a traction battery.

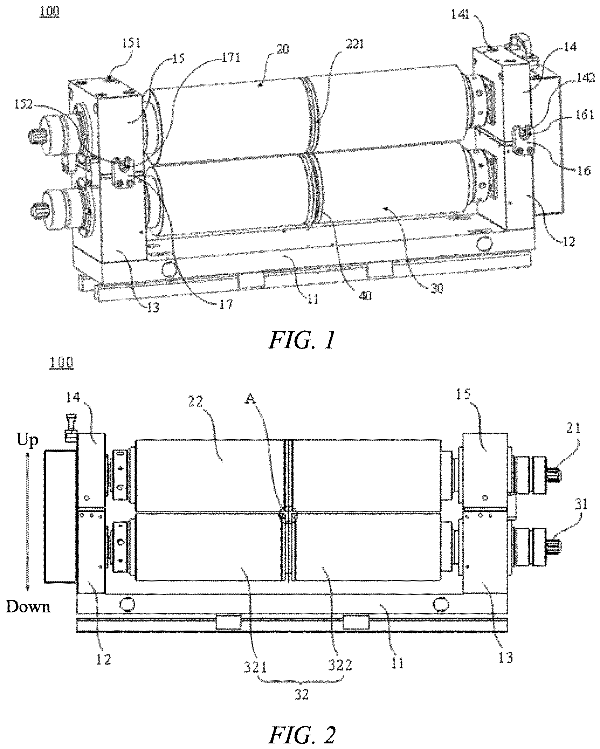

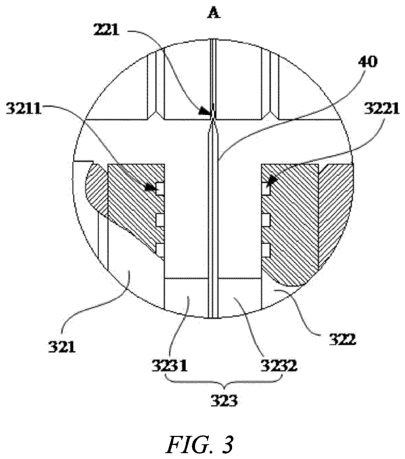

Referring to FIGS. 1 to 3, FIG. 1 is a schematic diagram of an electrode plate slitting cutter holder in a perspective; FIG. 2 is a schematic diagram of an electrode plate slitting cutter holder provided in some embodiments of the present application in another perspective; and FIG. 3 is an enlarged schematic diagram of a portion A in FIG. 2. An electrode plate slitting cutter holder 100, comprising: a frame, an upper cutter holder 20, and a lower cutter holder 30. Two ends of the upper cutter holder 20 are rotatably connected to the frame; and the lower cutter holder 30 is located below the upper cutter holder 20 and arranged in parallel with the upper cutter holder 20, and two ends of the lower cutter holder 30 are rotatably connected to the frame, wherein the lower cutter holder 30 is provided with a double-bevel cutter 40, and the other is provided with a cutter groove 221 corresponding to a position of the double-bevel cutter 40 and configured to cooperate with the double-bevel cutter 40.

The double-bevel cutter is a cutter with bevels on two sides in a thickness direction, such as a cutter with an inversely V-shaped blade in FIG. 3, and the bevels arranged on the two sides of the double-bevel cutter 40 in the thickness direction can be simultaneously in contact with the positive and negative electrode plates of the battery and slit the positive and negative electrode plates of the battery.

The cutter groove 221 is a groove that can accommodate the blades of the double-bevel cutter 40.

The lower cutter holder 30 is provided with the double-bevel cutter 40, and the other is provided with the cutter groove 221 corresponding to the position of the double-bevel cutter 40.

In the electrode plate slitting cutter holder 100 the lower cutter holder 30 is provided with the double-bevel cutter 40, and the other is provided with the cutter groove 221 corresponding to the position of the double-bevel cutter 40 and is configured to wind positive and negative electrode plates of a battery, so that after a distance between the upper cutter holder 20 and the lower cutter holder 30 is adjusted, the upper cutter holder 20 and the lower cutter holder 30 are driven to rotate relative to the frame, and thus the double-bevel cutter 40 can slit the positive and negative electrode plates of the battery. Because the double-bevel cutter 40 is arranged on only the lower cutter holder 30, the other is provided with the cutter groove configured to accommodate the double-bevel cutter 40, the double-bevel cutter 40 will not wear. This prolongs the service life of the double-bevel cutter 40, and avoids frequent replacement of the double-bevel cutter 40, thereby helping to improve slitting quality of the positive and negative electrode plates of the battery.

Referring to FIGS. 1 to 3, the upper cutter holder 20 comprises an upper cutter shaft 21 and an upper shaft sleeve 22 arranged on a peripheral side of the upper cutter shaft 21, and the lower cutter holder 30 comprises a lower cutter shaft 31 and a lower shaft sleeve 32 arranged on a peripheral side of the lower cutter shaft 31, wherein the upper cutter shaft 21 and the lower cutter shaft 31 are rotatably connected to the frame, the lower shaft sleeve 32 is fixedly connected to the double-bevel cutter 40, and a peripheral side of the other is provided with the cutter groove 221.

The upper cutter shaft 21 and the lower cutter shaft 31 are rotating shafts. The upper cutter shaft 21 and the lower cutter shaft 31 are connected to the driving mechanism on the frame. The driving mechanism may be a motor and a transmission shaft connected to the motor, and the transmission shaft is connected to the upper cutter shaft 21 and the lower cutter shaft 31, so that the upper cutter shaft 21 and the lower cutter shaft 31 can be driven to rotate when the motor operates.

The upper shaft sleeve is arranged on a periphery of the upper cutter shaft 21 in a sleeved manner, and is fixed relative to a position of the upper cutter shaft 21. When the upper cutter shaft 21 rotates, the upper shaft sleeve 22 also rotates.

The lower shaft sleeve 32 is arranged on a periphery of the lower cutter shaft 31 in a sleeved manner, and is fixed relative to a position of the lower cutter shaft 31. When the lower cutter shaft 31 rotates, the lower shaft sleeve 32 also rotates.

For example, the upper cutter shaft 21 and the lower cutter shaft 31 are provided with external threads, the upper shaft sleeve 22 and the lower shaft sleeve 32 are provided with internal threads, the upper shaft sleeve 22 is in threaded connection with the upper cutter shaft 21, and the lower shaft sleeve 32 is in threaded connection with the lower cutter shaft 31.

The arrangement of the upper shaft sleeve 22 on the periphery of the upper cutter shaft 21 and the arrangement of the lower shaft sleeve 32 on the periphery of the lower cutter shaft 31 facilitate the installation of the double-bevel cutter 40 on the lower shaft sleeve 32 and the arrangement of the cutter groove 221 in the other. In addition, outer surfaces of the upper shaft sleeve 22 and the lower shaft sleeve 32 are smooth curved surfaces, thereby facilitating the stable slitting of the positive and negative electrode plates of the battery by the double-bevel cutter 40 when the upper cutter shaft 21 and the lower cutter shaft 31 rotate.

Referring to FIGS. 1 to 3, a peripheral side of the upper shaft sleeve 22 is provided with a cutter groove 221; the lower shaft sleeve 32 is fixedly connected to the double-bevel cutter 40, the lower shaft sleeve 32 comprises a first shaft sleeve 321 and a second shaft sleeve 322 respectively arranged on two sides of the double-bevel cutter 40, a quick release mechanism 323 is arranged between the first shaft sleeve 321 and the second shaft sleeve 322, and the quick release mechanism 323 is configured to lock the double-bevel cutter 40 between the first shaft sleeve 321 and the second shaft sleeve 322.

The quick release mechanism 323 has functions of quick installation and quick disassembly of the double-bevel cutter 40, which can not only quickly lock the double-bevel cutter 40 between the first shaft sleeve 321 and the second shaft sleeve 322, but also quickly separate the double-bevel cutter 40 from the first shaft sleeve 321 and the second shaft sleeve 322.

The arrangement of the quick release mechanism 323 between the first shaft sleeve 321 and the second shaft sleeve 322 facilitates the installation and fixation of the double-bevel cutter 40, and facilitates the replacement or maintenance of the double-bevel cutter 40.

Referring to FIGS. 2 and 3, the quick release mechanism 323 comprises a first thread sleeve 3231 and a second thread sleeve 3232 which is in threaded fit with the first thread sleeve 3231, wherein the first thread sleeve 3231 and the second thread sleeve 3232 are provided over the lower cutter shaft 31 in a sleeved manner, and are fixedly connected to the first shaft sleeve 321 and the second shaft sleeve 322, respectively, for locking the double-bevel cutter 40 in a threaded connection.

For example, the first thread sleeve 3231 and the second thread sleeve 3232 are arranged on the lower cutter shaft 31 in a sleeved manner, an end of the first thread sleeve 3231 is fixedly connected to the first shaft sleeve 321, an end of the second thread sleeve 3232 is fixedly connected to the second shaft sleeve 322, one of the first thread sleeve 3231 and the second thread sleeve 3232 is provided with an internal thread, the other is provided with an external thread, and the first thread sleeve 3231 is in threaded connection with the second thread sleeve 3232.

A side of the first shaft sleeve 321 that faces the second shaft sleeve 322 is provided with the first thread sleeve 3231, a side of the second shaft sleeve 322 that faces the first shaft sleeve 321 is provided with the second thread sleeve 3232, the first thread sleeve 3231 and the second thread sleeve 3232 are arranged on the lower cutter shaft 31 in a sleeved manner, where the double-bevel cutter 40 is provided with a communication hole, the double-bevel cutter 40 is arranged on the lower cutter shaft 31 in a sleeved manner through the communication hole, and one of the first thread sleeve 3231 and the second thread sleeve 3232 that is provided with the external thread is inserted in the communication hole of the double-bevel cutter 40, so that the double-bevel cutter 40 can be locked between the first shaft sleeve 321 and the second shaft sleeve 322 after the first thread sleeve 3231 is in threaded connection with the second thread sleeve 3232, and the structure and principle are relatively simple and easy to implement.

Referring to FIG. 3, a side of the first shaft sleeve 321 that faces the double-bevel cutter 40 is provided with a first dust removal port 3211, and the first dust removal port 3211 is configured to adsorb powder falling off during electrode plate slitting; and/or a side of the second shaft sleeve 322 that faces the double-bevel cutter 40 is provided with a second dust removal port 3221, and the second dust removal port 3221 is configured to adsorb powder falling off during electrode plate slitting.

The first dust removal port 3211 extends in an axial direction of the first shaft sleeve 321 and runs through the first shaft sleeve 321, and the second dust removal port 3221 extends in an axial direction of the second shaft sleeve 322 and runs through the second shaft sleeve 322.

For example, the first dust removal port 3211 and the second dust removal port 3221 are annular dust removal ports, and one or more first dust removal ports 3211 and one or more second dust removal ports 3221 may be provided.

Specifically, a first dust collector is arranged on a side of the first dust removal port 3211 away from the double-bevel cutter 40, and a second dust collector is arranged on a side of the second dust removal port 3221 away from the double-bevel cutter 40. When the first dust collector and the second dust collector operate, pollutants such as dust falling off when the double-bevel cutter 40 slits the positive and negative electrode plates of the battery can be adsorbed through the first dust removal port 3211 and the second dust removal port 3221, thereby helping to improve the slitting quality of the positive and negative electrode plates of the battery.

Referring to FIGS. 1 and 2, the frame comprises: a bottom plate 11 extending in a lengthwise direction of the upper cutter shaft 21; a lower cutter mount comprising a first cutter mount 12 and a second cutter mount 13 that are arranged at two ends of the bottom plate 11 in a lengthwise direction; and an upper cutter mount comprising a third cutter mount 14 arranged above the first cutter mount 12 and a fourth cutter mount 15 arranged above the second cutter mount 13, wherein two ends of the upper cutter shaft 21 are respectively rotatably connected to the third cutter mount 14 and the fourth cutter mount 15, and two ends of the lower cutter shaft 31 are respectively rotatably connected to the first cutter mount 12 and the second cutter mount 13.

The lower cutter mount comprises the first cutter mount 12 and the second cutter mount 13, and the first cutter mount 12 and the second cutter mount 13 are spaced apart, have positions corresponding to each other, and are configured to be rotatably connected to two ends of the lower cutter shaft 31.

The upper cutter mount comprises the third cutter mount 14 and the fourth cutter mount 15, and the third cutter mount 14 arranged on the first cutter mount 12 and the fourth cutter mount 15 arranged on the second cutter mount 13 are configured to be rotatably connected to two ends of the upper cutter shaft 21.

Specifically, the first cutter mount 12, the second cutter mount 13, the third cutter mount 14 and the fourth cutter mount 15 are all provided with bearings, the two ends of the upper cutter shaft 21 are respectively in close fit and connection with the bearings on the first cutter mount 12 and the third cutter mount 14, the two ends of the lower cutter shaft 31 are respectively in close fit and connection with the bearings on the second cutter mount 13 and the fourth cutter mount 15, and a driving mechanism is arranged on a side of the frame; and the driving mechanism is connected to the upper cutter shaft 21 and the lower cutter shaft 31 and is configured to drive the upper cutter shaft 21 to rotate relative to the upper cutter mount and drive the lower cutter shaft 31 to rotate relative to the lower cutter mount, thereby ensuring the stability of the upper cutter shaft 21 and the lower cutter shaft 31 during rotation.

Referring to FIGS. 1 and 2, a first lifting adjustment assembly is arranged between the first cutter mount 12 and the third cutter mount 14, a second lifting adjustment assembly is arranged between the second cutter mount 13 and the fourth cutter mount 15, and the first lifting adjustment assembly and the second lifting adjustment assembly are configured to adjust a distance between the upper cutter shaft 21 and the lower cutter shaft

The first lifting adjustment assembly can adjust a distance between the third cutter mount 14 and the first cutter mount 12. The second lifting adjustment assembly can adjust a distance between the fourth cutter mount 15 and the second cutter mount 13, so that a distance between the upper cutter mount and the lower cutter mount can be adjusted.

The first lifting adjustment assembly adjusts the distance between the first cutter mount 12 and the third cutter mount 14, and the second lifting adjustment assembly adjusts the distance between the second cutter mount 13 and the fourth cutter mount 15, so as to adjust the distance between the upper cutter holder 20 and the lower cutter holder 30, and then adjust the distance between the double-bevel cutter 40 and the cutter groove 221. Therefore, on the one hand, the distance between the upper cutter holder 20 and the lower cutter holder 30 fits with a thickness of each of the positive and negative electrode plates of the battery, and on the other hand, the damage caused by the contact between the double-bevel cutter 40 and the cutter groove 221 during electrode plate slitting is prevented.

Referring to FIGS. 1 and 2, the first lifting adjustment assembly comprises a first screw 141 and a first elastic member, the first elastic member is arranged between the first cutter mount 12 and the third cutter mount 14, the first cutter mount 12 is provided with a first threaded hole, the third cutter mount 14 is provided with a second threaded hole in communication with the first threaded hole, and the first screw 141 is in threaded connection with the first cutter mount 12 and is in threaded connection with the third cutter mount 14 through the second threaded hole; and/or the second lifting adjustment assembly comprises a second screw 151 and a second elastic member, the second elastic member is arranged between the second cutter mount 13 and the fourth cutter mount 15, the second cutter mount 13 is provided with a third threaded hole, the fourth cutter mount 15 is provided with a fourth threaded hole in communication with the third threaded hole, and the second screw 151 is in threaded connection with the fourth cutter mount 15 and is in threaded connection with the second cutter mount 13 through the third threaded hole.

For example, the first elastic member and the second elastic member are springs, rubber pads, silicone pads, or the like. When the first screw 141 and the second screw 151 are tightened, that is, when the distance between the upper cutter mount and the lower cutter mount is adjusted to decrease, the first elastic member is squeezed to elastically deform and store elastic potential energy; and when the first screw 141 and the second screw 151 are loosened, the first elastic member and the second elastic member release elastic potential energy, and the distance between the upper cutter mount and the lower cutter mount is increased. During the adjustment of the upper cutter mount and the lower cutter mount, the first screw 141 is always in threaded connection with the third cutter mount 14 and the first cutter mount 12, and the second screw 151 is always in threaded connection with the fourth cutter mount 15 and the second cutter mount 13.

The first elastic member is arranged between the first cutter mount 12 and the third cutter mount 14, and the first screw 141 is in threaded connection with the third cutter mount 14 and the first cutter mount 12, so that the distance between the first cutter mount 12 and the third cutter mount 14 can be adjusted by adjusting a length of threaded connection between the first screw 141 and the second threaded hole. Similarly, the second elastic member is arranged between the second cutter mount 13 and the fourth cutter mount 15, and the second screw 151 is in threaded connection with the fourth cutter mount 15 and the second cutter mount 13, so that after the second screw 151 is in threaded connection with the fourth cutter mount 15, the distance between the fourth cutter mount 15 and the second cutter mount 13 can be adjusted by adjusting a length of threaded connection between the second screw 151 and the fourth threaded hole in the second cutter mount 13.

In addition, after the distance between the upper cutter mount and the lower cutter mount is adjusted, when the positive and negative electrode plates of the battery between the upper cutter holder 20 and the lower cutter holder 30 are uneven in thickness, the first elastic member and the second elastic member serves an elastic buffering function, which can ensure the stable conveying of the electrode plates between the upper cutter holder 20 and the lower cutter holder 30, thereby ensuring the normal slitting of the electrode plates by the double-bevel cutter 40.

Further, a first pressure sensor may be arranged between the first cutter mount 12 and the third cutter mount 14, and a second pressure sensor may be arranged between the second cutter mount 13 and the fourth cutter mount 15. The first pressure sensor can detect a pressure on the first cutter mount 12, and the second pressure sensor can detect a pressure on the second cutter mount 13. When the pressure on the first cutter mount 12 and the pressure on the second cutter mount 13 are the same, it indicates that the distance between the third cutter mount 14 and the first cutter mount 12 is the same as that between the fourth cutter mount 15 and the second cutter mount 13, thereby facilitating the equidistant adjustment of the distance between the upper cutter mount and the lower cutter mount.

Referring to FIGS. 1 and 2, one of the first cutter mount 12 and the third cutter mount 14 is provided with a first guide connecting member 16, the other is provided with a first connecting column 142, the first guide connecting member 16 is provided with a first guide groove 161 extending in a vertical direction, and the first connecting column 142 is inserted into the first guide groove 161; and/or one of the second cutter mount 13 and the fourth cutter mount 15 is provided with a second guide connecting member 17, the other is provided with a second connecting column 152, the second guide connecting member 17 is provided with a second guide groove 171 extending in a vertical direction, and the second connecting column 152 is inserted into the guide groove.

One or more first guide connecting members 16 and one or more second guide connecting members 17 may be provided, and correspondingly, one or more first connecting columns 142 and one or more second connecting columns 152 may also be provided. Each first guide connecting member 16 may be in bolted connection with or welded to the first cutter mount 12 or the third cutter mount 14, and each second guide connecting member 17 may be in bolted connection with or welded to the second cutter mount 13 or the fourth cutter mount 15.

Specifically, the first guide groove 161 and the second guide groove 171 are U-shaped grooves. By inserting a first guide post into the first guide groove 161, the first guide groove 161 serves a guiding and limiting function, so that the third cutter mount 14 can only move relative to the first cutter mount 12 in the vertical direction, thereby preventing deviation during adjustment of a height distance between the third cutter mount 14 and the first cutter mount 12.

Similarly, by inserting a second guide post into the second guide groove 171, the second guide groove 171 also serves a guiding and limiting function, so that the fourth cutter mount 15 can only move relative to the second cutter mount 13 in the vertical direction, thereby preventing deviation during adjustment of a height distance between the fourth cutter mount 15 and the second cutter mount 13.

According to some embodiments, double-bevel cutter 40 is circular, the double-bevel cutter 40 is coaxially arranged with the lower shaft sleeve 32, and a diameter of the double-bevel cutter 40 is greater than that of the lower shaft sleeve 32.

Specifically, a biting amount of the double-bevel cutter 40 is 1/2 of a difference between the diameter of the double-bevel cutter 40 and the diameter of the lower shaft sleeve 32.

After the biting amount of the double-bevel cutter 40 is set, the stability of the double-bevel cutter 40 in slitting the positive and negative electrode plates of the battery can be ensured, which helps to improve the slitting quality of the electrode plates.

Referring to FIGS. 1 and 2, projections of axes of the upper cutter holder 20 and the lower cutter holder 30 in the vertical direction coincide.

The projections of the axes of the upper cutter holder 20 and the lower cutter holder 30 in the vertical direction coincide, that is, the axes of the upper cutter holder 20 and the lower cutter holder 30 are located in a same vertical plane.

The setting of the axes of the upper cutter holder 20 and the lower cutter holder 30 in the same vertical plane can reduce a space occupied by the electrode plate slitting cutter holder 100 in a horizontal direction, and help to reduce the volume of the product, thereby facilitating the installation and arrangement of the product.

Referring to FIGS. 1 to 3, the present application provides an electrode plate slitting cutter holder 100, comprising: a frame, an upper cutter holder 20, a lower cutter holder 30, a double-bevel cutter 40, a quick release mechanism 323, a lifting adjustment mechanism, a dust removal mechanism, and a driving mechanism. The upper cutter holder 20 comprises an upper cutter shaft 21 and an upper shaft sleeve 22 arranged on a periphery of the upper cutter shaft 21. The upper shaft sleeve 22 is provided with a cutter groove 221 configured to accommodate blades of the double-bevel cutter 40. The lower cutter holder 30 comprises a lower cutter shaft 31, and a first shaft sleeve 321 and a second shaft sleeve 322 that are coaxially arranged on a periphery of the lower cutter shaft 31. The quick release mechanism 323 is arranged between the first shaft sleeve 321 and the second shaft sleeve 322, and the double-bevel cutter 40 is arranged between the first shaft sleeve 321 and the second shaft sleeve 322 by means of the quick release mechanism 323. The double-bevel cutter 40 corresponds to a position of the cutter groove 221. The dust removal mechanism comprises a first dust collector arranged on a side of the first shaft sleeve 321 away from the double-bevel cutter 40 and a second dust collector arranged on a side of the second shaft sleeve 322 away from the double-bevel cutter 40. The first cutter shaft and the second cutter shaft are respectively provided with a first annular dust removal port and a second annular dust removal port. The first annular dust removal port runs through the first shaft sleeve 321 in a radial direction of the first shaft sleeve 321, and the second annular dust removal port runs through the second shaft sleeve 322 in an axial direction of the second shaft sleeve 322. When the first dust collector and the second dust collector operate, pollutants such as dust falling off when the positive and negative electrode plates of the battery are slit can be adsorbed through the first annular dust removal port and the second annular dust removal port. The frame comprises a bottom plate 11, an upper cutter mount, and a lower cutter mount. The lower cutter mount comprises a first cutter mount 12 and a second cutter mount 13 arranged on the bottom plate 11 in a lengthwise direction. The lower cutter mount comprises a third cutter mount 14 arranged on the first cutter mount 12 and a fourth cutter mount 15 arranged on the second cutter mount 13. The lifting adjustment mechanism comprises a first lifting adjustment assembly and a second lifting adjustment assembly. The first lifting adjustment assembly comprises a first screw 141 and a first elastic member. The first elastic member is arranged in front of the first cutter mount 12 and the third cutter mount 14. The first cutter mount 12 and the third cutter mount 14 are respectively provided with a first threaded hole and a second threaded hole in communication with each other. The first screw 141 is inserted into the first threaded hole and is adjustably and fixedly connected to the third cutter mount 14 through the second threaded hole. The second lifting adjustment assembly comprises a second screw 151 and a second elastic member. The second elastic member is arranged between the second cutter mount 13 and the fourth cutter mount 15, and the second cutter mount 13 and the fourth cutter mount 15 are respectively provided with a third threaded hole and a fourth threaded hole in communication with each other. The second screw 151 is inserted into the fourth threaded hole and is adjustably and fixedly connected to the second cutter mount 13 through the third threaded hole. The driving mechanism comprises a motor and a transmission shaft connected to the motor, the transmission shaft is connected to the upper cutter shaft 21 and the lower cutter shaft 31, and the motor can drive the upper cutter shaft 21 and the lower cutter shaft 31 to rotate relative to the frame by means of the transmission shaft when operating. By means of the above technical solution, the service life of the double-bevel cutter 40 can be effectively prolonged, and the slitting quality of the positive and negative electrode plates of the battery can be improved.

The present application further provides an electrode plate slitting machine, comprising an electrode plate slitting cutter holder 100 according to any one of the embodiments of the first aspect.

Because the electrode plate slitting machine provided according to the embodiments of the present application comprises the electrode plate slitting cutter holder 100 according to any one of the embodiments of the first aspect, the electrode plate slitting machine has the technical effects of any one of the above embodiments, which will not be described herein again.

## Claims

1. An electrode plate slitting cutter holder (100), comprising:
a frame;
an upper cutter holder (20), two ends of the upper cutter holder (20) being rotatably connected to the frame; and
a lower cutter holder (30), the lower cutter holder (30) being located below the upper cutter holder (20) and arranged in parallel with the upper cutter holder (20), and two ends of the lower cutter holder (30) being rotatably connected to the frame,
wherein one of the upper cutter holder (20) and the lower cutter holder (30) is provided with a double-bevel cutter (40), and the other is provided with a cutter groove (221) corresponding to a position of the double-bevel cutter (40) and configured to cooperate with the double-bevel cutter (40),
wherein the upper cutter holder (20) comprises an upper cutter shaft (21) and an upper shaft sleeve (22) arranged on a peripheral side of the upper cutter shaft (21), and the lower cutter holder (30) comprises a lower cutter shaft (31) and a lower shaft sleeve (32) arranged on a peripheral side of the lower cutter shaft (31),
wherein the upper cutter shaft (21) and the lower cutter shaft (31) are separately connected to the frame in a rotatable manner, one of the upper shaft sleeve (22) and the lower shaft sleeve (32) is fixedly connected to the double-bevel cutter (40), and a peripheral side of the other is provided with the cutter groove (221),
wherein a peripheral side of the upper shaft sleeve (22) is provided with the cutter groove (221), the lower shaft sleeve (32) is fixedly connected to the double-bevel cutter (40), the lower shaft sleeve (32) comprises a first shaft sleeve (321) and a second shaft sleeve (322) respectively arranged on two sides of the double-bevel cutter (40),
**characterized in that**
a quick release mechanism (323) is arranged between the first shaft sleeve (321) and the second shaft sleeve (322), and the quick release mechanism (323) is configured to lock the double-bevel cutter (40) between the first shaft sleeve (321) and the second shaft sleeve (322),
wherein the quick release mechanism (323) comprises a first thread sleeve (3231) and a second thread sleeve (3232) which is in threaded fit with the first thread sleeve (3231), wherein the first thread sleeve (3231) and the second thread sleeve (3232) are provided over the lower cutter shaft (31) in a sleeved manner, and are fixedly connected to the first shaft sleeve (321) and the second shaft sleeve (322), respectively, for locking the double-bevel cutter (40) in a threaded connection,
wherein a side of the first shaft sleeve (321) that faces the second shaft sleeve (322) is provided with the first thread sleeve (3231), a side of the second shaft sleeve (322) that faces the first shaft sleeve (321) is provided with the second thread sleeve (3232),
wherein the double-bevel cutter (40) is provided with a communication hole, and the double-bevel cutter (40) is arranged on the first thread sleeve (3231) or the second thread sleeve (3232) through the communication hole, so that the double-bevel cutter is locked between the first shaft sleeve (321) and the second shaft sleeve (322) after the first thread sleeve (3231) is in threaded connection with the second thread sleeve (3232).

2. The electrode plate slitting cutter holder (100) according to claim 1, wherein
a side of the first shaft sleeve (321) that faces the double-bevel cutter (40) is provided with a first dust removal port (3211), and the first dust removal port (3211) is configured to adsorb powder falling off during electrode plate slitting, wherein the first dust removal port (3211) extends in an axial direction of the first shaft sleeve (321) and runs through the first shaft sleeve (321), a first dust collector is arranged on a side of the first dust removal port (3211) away from the double-bevel cutter (40), and the powder falling off during electrode plate slitting is removed through the first dust removal port (3211) when the first dust collector operates; and/or
a side of the second shaft sleeve (322) that faces the double-bevel cutter (40) is provided with a second dust removal port (3221), and the second dust removal port (3221) is configured to adsorb powder falling off during electrode plate slitting, wherein the second dust removal port (322) extends in an axial direction of the second shaft sleeve (322) and runs through the second shaft sleeve (322), a second dust collector is arranged on a side of the second dust removal port (3221) away from the double-bevel cutter, and the powder falling off during electrode plate slitting is removed through the second dust removal port (3221) when the second dust collector operates.

3. The electrode plate slitting cutter holder (100) according to claim 1 or 2, wherein the frame comprises:
a bottom plate (11) extending in a lengthwise direction of the upper cutter shaft (21);
a lower cutter mount comprising a first cutter mount (12) and a second cutter mount (13) that are arranged at two ends of the bottom plate (11) in a lengthwise direction; and
an upper cutter mount comprising a third cutter mount (14) arranged above the first cutter mount (12) and a fourth cutter mount (15) arranged above the second cutter mount (13),
wherein two ends of the upper cutter shaft (21) are rotatably connected to the third cutter mount (14) and the fourth cutter mount (15), respectively, and two ends of the lower cutter shaft (31) are rotatably connected to the first cutter mount (12) and the second cutter mount (13), respectively.

4. The electrode plate slitting cutter holder (100) according to claim 3, wherein a first lifting adjustment assembly is arranged between the first cutter mount (12) and the third cutter mount (14), a second lifting adjustment assembly is arranged between the second cutter mount (13) and the fourth cutter mount (15), and the first lifting adjustment assembly and the second lifting adjustment assembly are configured to adjust a distance between the upper cutter shaft (21) and the lower cutter shaft (31),
wherein the first lifting adjustment assembly comprises a first screw and a first elastic member, the first elastic member is arranged between the first cutter mount (12) and the third cutter mount (14), the first cutter mount (12) is provided with a first threaded hole, the third cutter mount (14) is provided with a second threaded hole in communication with the first threaded hole, and the first screw is in threaded connection with the first cutter mount (12) and is in threaded connection with the third cutter mount (14) through the second threaded hole; and/or
the second lifting adjustment assembly comprises a second screw and a second elastic member, the second elastic member is arranged between the second cutter mount (13) and the fourth cutter mount (15), the second cutter mount (13) is provided with a third threaded hole, the fourth cutter mount (15) is provided with a fourth threaded hole in communication with the third threaded hole, and the second screw is in threaded connection with the fourth cutter mount (15) and is in threaded connection with the second cutter mount (13) through the third threaded hole.

5. The electrode plate slitting cutter holder (100) according to claim 4, wherein one of the first cutter mount (12) and the third cutter mount (14) is provided with a first guide connecting member (16), the other is provided with a first connecting column (142), the first guide connecting member (16) is provided with a first guide groove (161) extending in a vertical direction, and the first connecting column (142) is inserted in the first guide groove (161); and/or
one of the second cutter mount (13) and the fourth cutter mount (15) is provided with a second guide connecting member (17), the other is provided with a second connecting column (152), the second guide connecting member (17) is provided with a second guide groove (171) extending in a vertical direction, and the second connecting column (152) is inserted in the guide groove.

6. The electrode plate slitting cutter holder (100) according to claim 1 or 2, wherein the double-bevel cutter (40) is circular, the double-bevel cutter (40) is coaxially arranged with the lower shaft sleeve (32), and a diameter of the double-bevel cutter (40) is greater than that of the lower shaft sleeve (32).

7. The electrode plate slitting cutter holder (100) according to claim 1 or 2, wherein projections of axes of the upper cutter holder (20) and the lower cutter holder (30) in the vertical direction coincide.

8. An electrode plate slitting machine, comprising an electrode plate slitting cutter holder (100) according to any one of claims 1 to 7.

## Patentansprüche

1. Elektrodenplattenschlitzmessehalter (100), umfassend:
ein Gestell;
einen oberen Messerhalter (20), wobei zwei Enden des oberen Messerhalters (20) drehbar mit dem Gestell verbunden sind; und
einen unteren Messerhalter (30), wobei sich der untere Messerhalter (30) unterhalb des oberen Messerhalters (20) befindet und parallel zum oberen Messerhalter (20) angeordnet ist und zwei Enden des unteren Messerhalters (30) drehbar mit dem Gestell verbunden sind,
wobei einer von dem oberen Messerhalter (20) und dem unteren Messerhalter (30) mit einem Doppelfasenmesser (40) versehen ist und der andere mit einer Messeraufnahmenut (221) versehen ist, die einer Position des Doppelfasenmessers (40) entspricht und dazu ausgelegt ist, mit dem Doppelfasenmesser (40) zusammenzuwirken,
wobei der obere Messerhalter (20) eine obere Messerwelle (21) und eine obere Wellenhülse (22), die auf einer Umfangsseite der oberen Messerwelle (21) angeordnet ist, umfasst, und der untere Messerhalter (30) eine untere Messerwelle (31) und eine untere Wellenhülse (32), die auf einer Umfangsseite der unteren Messerwelle (31) angeordnet sind, umfasst,
wobei die obere Messerwelle (21) und die untere Messerwelle (31) separat drehbar mit dem Gestell verbunden sind, eine von der oberen Wellenhülse (22) und der unteren Wellenhülse (32) fest mit dem Doppelfasenmesser (40) verbunden ist und eine Umfangsseite der anderen mit der Messeraufnahmenut (221) versehen ist,
wobei eine Umfangsseite der oberen Wellenhülse (22) mit der Messeraufnahmenut (221) versehen ist, die untere Wellenhülse (32) fest mit dem Doppelfasenmesser (40) verbunden ist, die untere Wellenhülse (32) eine erste Wellenhülse (321) und eine zweite Wellenhülse (322) umfasst, die jeweils auf zwei Seiten des Doppelfasenmessers (40) angeordnet sind,
**dadurch gekennzeichnet, dass**
ein Schnelllösemechanismus (323) zwischen der ersten Wellenhülse (321) und der zweiten Wellenhülse (322) angeordnet ist und der Schnelllösemechanismus (323) dazu ausgelegt ist, das Doppelfasenmesser (40) zwischen der ersten Wellenhülse (321) und der zweiten Wellenhülse (322) zu verriegeln,
wobei der Schnelllösemechanismus (323) eine erste Gewindehülse (3231) und eine zweite Gewindehülse (3232), die mit der ersten Gewindehülse (3231) in Gewindesitz steht, umfasst, wobei die erste Gewindehülse (3231) und die zweite Gewindehülse (3232) über der unteren Messerwelle (31) hülsenförmig bereitgestellt sind und mit der ersten Wellenhülse (321) bzw. der zweiten Wellenhülse (322) zum Verriegeln des Doppelfasenmessers (40) in einer Gewindeverbindung fest verbunden sind,
wobei eine Seite der ersten Wellenhülse (321), die der zweiten Wellenhülse (322) zugewandt ist, mit der ersten Gewindehülse (3231) versehen ist, eine Seite der zweiten Wellenhülse (322), die der ersten Wellenhülse (321) zugewandt ist, mit der zweiten Gewindehülse (3232) versehen ist, wobei das Doppelfasenmesser (40) mit einer Verbindungsbohrung versehen ist und das Doppelfasenmesser (40) durch die Verbindungsbohrung an der ersten Gewindehülse (3231) oder der zweiten Gewindehülse (3232) angeordnet ist, sodass das Doppelfasenmesser zwischen der ersten Wellenhülse (321) und der zweiten Wellenhülse (322) verriegelt wird, nachdem die erste Gewindehülse (3231) mit der zweiten Gewindehülse (3232) in Gewindeverbindung steht.

2. Elektrodenplattenschlitzmessehalter (100) nach Anspruch 1, wobei
eine Seite der ersten Wellenhülse (321), die dem Doppelfasenmesser (40) zugewandt ist, mit einer ersten Staubabsaugöffnung (3211) versehen ist, und die erste Staubabsaugöffnung (3211) dazu ausgelegt ist, während des Schlitzens der Elektrodenplatte abfallendes Pulver zu adsorbieren, wobei sich die erste Staubabsaugöffnung (3211) in einer axialen Richtung der ersten Wellenhülse (321) erstreckt und durch die erste Wellenhülse (321) verläuft, ein erster Staubsammler auf einer Seite der ersten Staubabsaugöffnung (3211) weg von dem Doppelfasenmesser (40) angeordnet ist, und das beim Schneiden der Elektrodenplatte abfallende Pulver durch die erste Staubabsaugöffnung (3211) entfernt wird, wenn der erste Staubsammler betrieben wird; und/oder eine Seite der zweiten Wellenhülse (322), die dem Doppelfasenmesser (40) zugewandt ist, mit einer zweiten Staubabsaugöffnung (3221) versehen ist, und die zweite Staubabsaugöffnung (3221) dazu ausgelegt ist, während des Schlitzens der Elektrodenplatte abfallendes Pulver zu adsorbieren, wobei sich die zweite Staubabsaugöffnung (322) in einer axialen Richtung der zweiten Wellenhülse (322) erstreckt und durch die zweite Wellenhülse (322) verläuft, ein zweiter Staubsammler auf einer Seite der zweiten Staubabsaugöffnung (3221) weg von dem Doppelfasenmesser angeordnet ist, und das beim Schneiden der Elektrodenplatte abfallende Pulver durch die zweite Staubabsaugöffnung (3221) entfernt wird, wenn der zweite Staubsammler betrieben wird.

3. Elektrodenplattenschlitzmessehalter (100) nach Anspruch 1 oder 2, wobei das Gestell umfasst:
eine Bodenplatte (11), die sich in einer Längsrichtung der oberen Messerwelle (21) erstreckt;
eine untere Messeraufnahme, die eine erste Messeraufnahme (12) und eine zweite Messeraufnahme (13) umfasst, die an zwei Enden der Bodenplatte (11) in einer Längsrichtung angeordnet sind; und
eine obere Messeraufnahme, die eine dritte Messeraufnahme (14), die über der ersten Messeraufnahme (12) angeordnet ist, und eine vierte Messeraufnahme (15), die über der zweiten Messeraufnahme (13) angeordnet ist, umfasst,
wobei zwei Enden der oberen Messerwelle (21) drehbar mit der dritten Messeraufnahme (14) bzw. der vierten Messeraufnahme (15) verbunden sind und zwei Enden der unteren Messerwelle (31) drehbar mit der ersten Messeraufnahme (12) bzw. der zweiten Messeraufnahme (13) verbunden sind.

4. Elektrodenplattenschlitzmessehalter (100) nach Anspruch 3, wobei eine erste Hubverstellbaugruppe zwischen der ersten Messeraufnahme (12) und der dritten Messeraufnahme (14) angeordnet ist, eine zweite Hubverstellbaugruppe zwischen der zweiten Messeraufnahme (13) und der vierten Messeraufnahme (15) angeordnet ist und die erste Hubverstellbaugruppe und die zweite Hubverstellbaugruppe dazu ausgelegt sind, einen Abstand zwischen der oberen Messerwelle (21) und der unteren Messerwelle (31) einzustellen,
wobei die erste Hubverstellbaugruppe eine erste Schraube und ein erstes elastisches Element umfasst, das erste elastische Element zwischen der ersten Messeraufnahme (12) und der dritten Messeraufnahme (14) angeordnet ist, die erste Messeraufnahme (12) mit einer ersten Gewindebohrung versehen ist, die dritte Messeraufnahme (14) mit einer zweiten Gewindebohrung in Kommunikation mit der ersten Gewindebohrung versehen ist, und die erste Schraube mit der ersten Messeraufnahme (12) in Gewindeverbindung steht und durch die zweite Gewindebohrung mit der dritten Messeraufnahme (14) in Gewindeverbindung steht; und/oder
die zweite Hubverstellbaugruppe eine zweite Schraube und ein zweites elastisches Element umfasst, das zweite elastische Element zwischen der zweiten Messeraufnahme (13) und der vierten Messeraufnahme (15) angeordnet ist, die zweite Messeraufnahme (13) mit einer dritten Gewindebohrung versehen ist, die vierte Messeraufnahme (15) mit einer vierten Gewindebohrung in Kommunikation mit der dritten Gewindebohrung versehen ist, und die zweite Schraube mit der vierten Messeraufnahme (15) in Gewindeverbindung steht und durch die dritte Gewindebohrung mit der zweiten Messeraufnahme (13) in Gewindeverbindung steht.

5. Elektrodenplattenschlitzmessehalter (100) nach Anspruch 4, wobei entweder die erste Messeraufnahme (12) oder die dritte Messeraufnahme (14) mit einem ersten Führungsverbindungselement (16) versehen ist, die andere mit einer ersten Verbindungssäule (142) versehen ist, das erste Führungsverbindungselement (16) mit einer ersten Führungsnut (161) versehen ist, die sich in einer vertikalen Richtung erstreckt, und die erste Verbindungssäule (142) in die erste Führungsnut (161) eingesetzt ist; und/oder
die zweite Messeraufnahme (13) oder die vierte Messeraufnahme (15) mit einem zweiten Führungsverbindungselement (17) versehen ist, die andere mit einer zweiten Verbindungssäule (152) versehen ist, das zweite Führungsverbindungselement (17) mit einer in vertikaler Richtung verlaufenden zweiten Führungsnut (171) versehen ist und die zweite Verbindungssäule (152) in die Führungsnut eingesetzt ist.

6. Elektrodenplattenschlitzmessehalter (100) nach Anspruch 1 oder 2, wobei das Doppelfasenmesser (40) kreisförmig ist, das Doppelfasenmesser (40) koaxial mit der unteren Wellenhülse (32) angeordnet ist und ein Durchmesser des Doppelfasenmessers (40) größer als der der unteren Wellenhülse (32) ist.

7. Elektrodenplattenschlitzmessehalter (100) nach Anspruch 1 oder 2, wobei Vorsprünge von Achsen des oberen Messerhalters (20) und des unteren Messerhalters (30) in vertikaler Richtung zusammenfallen.

8. Elektrodenplattenschlitzmaschine, umfassend einen Elektrodenplattenschlitzmessehalter (100) nach einem der Ansprüche 1 bis 7.

## Revendications

1. Support de coupe à refendre de plaque d'électrode (100), comprenant :
un bâti ;
un support de coupe supérieur (20), deux extrémités du support de coupe supérieur (20) étant reliées de manière rotative au bâti ; et
un support de coupe inférieur (30), le support de coupe inférieur (30) étant situé en dessous du Support de coupe supérieur (20) et agencé parallèlement au support de coupe supérieur (20), et deux extrémités du support de coupe inférieur (30) étant reliées de manière rotative au bâti,
l'un du support de coupe supérieur (20) et dusupport de coupe inférieur (30) étant pourvu d'une fraise à double biseau (40) et l'autre étant pourvu d'une rainure de fraise (221) correspondant à une position de la fraise à double biseau (40) et configurée pour coopérer avec la fraise à double biseau (40),
le support de coupe supérieur (20) comprenant un arbre de coupe supérieur (21) et un manchon d'arbre supérieur (22) agencé sur un côté périphérique de l'arbre de coupe supérieur (21), et le support de coupe inférieur (30) comprenant un arbre de coupe inférieur (31) et un manchon d'arbre inférieur (32) agencé sur un côté périphérique de l'arbre de coupe inférieur (31),
l'arbre de coupe supérieur (21) et l'arbre de coupe inférieur (31) étant reliés séparément au bâti de manière rotative, l'un du manchon d'arbre supérieur (22) et du manchon d'arbre inférieur (32) étant relié de manière fixe à la fraise à double biseau (40), et un côté périphérique de l'autre étant pourvu de la rainure de fraise (221),
un côté périphérique du manchon d'arbre supérieur (22) étant pourvu de la rainure de fraise (221), le manchon d'arbre inférieur (32) étant relié de manière fixe à la fraise à double biseau (40), le manchon d'arbre inférieur (32) comprenant un premier manchon d'arbre (321) et un second manchon d'arbre (322) agencés respectivement sur les deux côtés de la fraise à double biseau (40), **caractérisée en ce que**
un mécanisme de libération rapide (323) est agencé entre le premier manchon d'arbre (321) et le second manchon d'arbre (322), et le mécanisme de libération rapide (323) est configuré pour bloquer la fraise à double biseau (40) entre le premier manchon d'arbre (321) et le second manchon d'arbre (322),
le mécanisme de libération rapide (323) comprenant un premier manchon fileté (3231) et un second manchon fileté (3232) qui est en ajustement fileté avec le premier manchon fileté (3231), le premier manchon fileté (3231) et le second manchon fileté (3232) étant disposés sur l'arbre de coupe inférieur (31) de manière manchonés et étant reliés de manière fixe au premier manchon d'arbre (321) et au second manchon d'arbre (322) respectivement, afin de bloquer la fraise à double biseau (40) dans un assemblage fileté,
un côté du premier manchon d'arbre (321) qui fait face au second manchon d'arbre (322) étant pourvu du premier manchon fileté (3231), un côté du second manchon d'arbre (322) qui fait face au premier manchon d'arbre (321) étant pourvu du second manchon fileté (3232),
la fraise à double biseau (40) étant pourvue d'un trou de communication, et la fraise à double biseau (40) étant agencée sur le premier manchon fileté (3231) ou le second manchon fileté (3232) à travers le trou de communication, de sorte que la fraise à double biseau est bloquée entre le premier manchon d'arbre (321) et le second manchon d'arbre (322) une fois que le premier manchon fileté (3231) est en connexion filetée avec le second manchon fileté (3232).

2. Support de coupe à refendre de plaque d'électrode (100) selon la revendication 1,
un côté du premier manchon d'arbre (321) qui fait face à la fraise à double biseau (40) étant pourvu d'un premier orifice de dépoussiérage (3211), et le premier orifice de dépoussiérage (3211) étant configuré pour adsorber la poudre tombant pendant le refendage de la plaque d'électrode, le premier orifice de dépoussiérage (3211) s'étendant dans une direction axiale du premier manchon d'arbre (321) et passant à travers le premier manchon d'arbre (321), un premier collecteur de poussière étant agencé sur un côté du premier orifice de dépoussiérage (3211) éloigné de la fraise à double biseau (40), et la poudre tombant pendant le refendage de la plaque d'électrode étant éliminée par le premier orifice de dépoussiérage (3211) lorsque le premier collecteur de poussière fonctionne ; et/ou
un côté du second manchon d'arbre (322) qui fait face à la fraise à double biseau (40) étant pourvu d'un second orifice de dépoussiérage (3221), et le second orifice de dépoussiérage (3221) étant configuré pour adsorber la poudre tombant pendant le refendage de la plaque d'électrode, le second orifice de dépoussiérage (322) s'étendant dans une direction axiale du second manchon d'arbre (322) et traversant le second manchon d'arbre (322), un second collecteur de poussière étant agencé sur un côté du second orifice de dépoussiérage (3221) éloigné de la fraise à double biseau, et la poudre tombant pendant le refendage de la plaque d'électrode étant éliminée par le second orifice de dépoussiérage (3221) lorsque le second collecteur de poussière fonctionne.

3. Support de coupe à refendre de plaque d'électrode (100) selon la revendication 1 ou 2, le bâti comprenant :
une plaque de fond (11) s'étendant dans le sens de la longueur de l'arbre de coupe supérieur (21) ;
un montant de coupe inférieur comprenant un premier montant de coupe (12) et un deuxième montant de coupe (13) qui sont agencés aux deux extrémités de la plaque de fond (11) dans le sens de la longueur ; et
un montant de coupe supérieur comprenant un troisième montant de coupe (14) agencé au-dessus du premier montant de coupe (12) et un quatrième montant de coupe (15) agencé au-dessus du deuxième montant de coupe (13),
deux extrémités de l'arbre de coupe supérieur (21) étant reliées de manière rotative au troisième montant de coupe (14) et au quatrième montant de coupe (15), respectivement, et deux extrémités de l'arbre de coupe inférieur (31) étant reliées de manière rotative au premier montant de coupe (12) et au deuxième montant de coupe (13), respectivement.

4. Support de coupe à refendre de plaque d'électrode (100) selon la revendication 3, un premier ensemble de réglage de levage étant agencé entre le premier montant de coupe (12) et le troisième montant de coupe (14), un second ensemble de réglage de levage étant agencé entre le deuxième montant de coupe (13) et le quatrième montant de coupe (15), et le premier ensemble de réglage de levage et le second ensemble de réglage de levage étant configurés pour ajuster une distance entre l'arbre de coupe supérieur (21) et l'arbre de coupe inférieur (31),
le premier ensemble de réglage de levage comprenant une première vis et un premier élément élastique, le premier élément élastique étant agencé entre le premier montant de coupe (12) et le troisième montant de coupe (14), le premier montant de coupe (12) étant pourvu d'un premier trou fileté, le troisième montant de coupe (14) étant pourvu d'un second trou fileté en communication avec le premier trou fileté, et la première vis étant en liaison filetée avec le premier montant de coupe (12) et étant en liaison filetée avec le troisième montant de coupe (14) à travers le second trou fileté ; et/ou
le second ensemble de réglage de levage comprenant une seconde vis et un second élément élastique, le second élément élastique étant agencé entre le deuxième montant de coupe (13) et le quatrième montant de coupe (15), le deuxième montant de coupe (13) étant pourvu d'un troisième trou fileté, le quatrième montant de coupe (15) étant pourvu d'un quatrième trou fileté en communication avec le troisième trou fileté, et la seconde vis étant en liaison filetée avec le quatrième montant de coupe (15) et étant en liaison filetée avec le deuxième montant de coupe (13) à travers le troisième trou fileté.

5. Support de coupe à refendre de plaque d'électrode (100) selon la revendication 4, l'un du premier montant de coupe (12) et du troisième montant de coupe (14) étant pourvu d'un premier élément de connexion de guidage (16), l'autre étant pourvu d'une première colonne de connexion (142), le premier élément de connexion de guidage (16) étant pourvu d'une première rainure de guidage (161) s'étendant dans une direction verticale, et la première colonne de connexion (142) étant insérée dans la première rainure de guidage (161) ; et/ou l'un du deuxième montant de coupe (13) et du quatrième montant de coupe (15) étant pourvu d'un second élément de connexion de guidage (17), l'autre étant pourvu d'une seconde colonne de connexion (152), le second élément de connexion de guidage (17) étant pourvu d'une seconde rainure de guidage (171) s'étendant dans une direction verticale, et la seconde colonne de connexion (152) étant insérée dans la rainure de guidage.

6. Support de coupe à refendre de plaque d'électrode (100) selon la revendication 1 ou 2, la fraise à double biseau (40) étant circulaire, la fraise à double biseau (40) étant agencée coaxialement avec le manchon d'arbre inférieur (32), et un diamètre de la fraise à double biseau (40) étant supérieur à celui du manchon d'arbre inférieur (32).

7. Support de coupe à refendre de plaque d'électrode (100) selon la revendication 1 ou 2, des saillies d'axes du support de coupe supérieur (20) et du support de coupe inférieur (30) coïncidant dans la direction verticale.

8. Machine à refendre des plaques d'électrodes, comprenant un support de coupe à refendre de plaque d'électrode (100) selon l'une quelconque des revendications 1 à 7.
